# EUROPEAN PATENT SPECIFICATION

(11) **EP 1 911 731 B1**
(45) Date of publication and mention of the grant of the patent: **18.04.2012**
(21) Application number: 07291229.8
(22) Date of filing: 09.10.2007
(51) Int. Cl.: C04B 28/02, C04B 40/00, C04B 41/46

(54) **Cement shrinkage reducing agent and method for obtaining cement based articles having reduced shrinkage**
Zementschwundverringerungsmittel und Verfahren zur Herstellung von zementbasierten Artikeln mit verringertem Schwund
Agent de réduction du rétrécissement du ciment et procédé pour obtenir des articles à base de ciment à rétrécissement réduit

(30) Priority: 10.10.2006 EP 06291574
(43) Date of publication of application: 16.04.2008
(73) Proprietor: LAFARGE, 75116 Paris (FR)
(72) Inventor: Gartner, Ellis, 69003 Lyon (FR)
(74) Representative: Mérigeault, Shona

(56) References cited:
- WO-A-01/44136
- WO-A-96/06058
- JP-A- 7 017 752
- JP-A- 2002 193 686

## Description

### TECHNICAL FIELD

The present invention relates to an additive for use in conjunction with hydraulic cement binder so as to reduce shrinkage and cracking in hardened cement articles.

### TECHNICAL BACKGROUND

The compositions of hydraulic binders as used in ordinary concretes have been developed over time from the use of simple OPC (Ordinary Portland Cement), to more complex compositions that also include powders such as granulated blast furnace slags, fly ashes, limestones and natural pozzolans that permit the use of lower quantities of OPC in the concrete. Binder composition influences the properties of the resultant concrete. For example, one of the problems in the construction industry is cracking in concrete structures due to drying shrinkage. Drying shrinkage occurs when water evaporates from the hardened concrete, as is normal when the relative humidity of the environment is lower than 100%. The internal stress caused by this shrinkage can give rise to cracks and other physical and aesthetic defects in the resultant structure. As a consequence it is necessary to incorporate joints into concrete structures to relieve tensile stresses that are introduced in the structure due to the shrinkage-related volume changes. Joints are not aesthetically pleasing, and in large flat surfaces such as floors and facades there is generally a wish to reduce the number of joints necessary in the structure.

Thus incorporation of an anti-shrinkage agent directly into the cement binder, or into the fresh concrete during mixing or as surface additive, on hardened mortar or concrete mixtures would be extremely advantageous and would help to overcome the problems associated with shrinkage cited above.

The use of cement admixtures to overcome shrinkage problems has been described in the prior art. For example, US 4,547,223 discloses a cement shrinkage reducing agent and a cement composition comprising a compound of the general formula RO(AO)ₙH in which R represents a C₁₋₇ alkyl or C₅₋₆ cycloalkyl radical, A represents one or more C₂₋₃ alkylene radicals, and n has a value of 1-10) for use in making cement mortar and concrete.

US 6,398,866 discloses an agent for the reduction of the degree of shrinkage of hydraulic binders whereby said agent comprises an alkanolamine of formula R-NH-(AOH) wherein R is hydrogen or a linear or branched aliphatic or cyclic C₁-C₆ alkyl group, and A is a C₂H₄ group or C₃H₆ group, alone or in combination with hydroxyl compounds and/or ethers.

Simple alcohols have also been suggested as cement shrinkage reducing agents. Japanese publication No. 02-307849 discloses the use of a mixture of one or more kinds of alcohols represented by a general formula ROH where R is a 4-6C alkyl or 5-6C cycloalkyl, the shrinkage reducing agent being generally present at about 0.5-10% per weight of cement.

Various other alcohols, polyols and polyethers have been suggested as shrinkage control agents. WO 95/30630 discloses a composition comprised of cement and 0.1-10%, preferably 0.5-4% based on weight cement of an alkyl ether derivative of an aliphatic polyhydroxy compound having the formula Q-[(A)ₙ-OR]x wherein Q is C₃-C₁₂ aliphatic hydrocarbon group, each R is hydrogen or a C₁-C₁₀ alkyl group at least one being the C₁-C₁₀ alkyl group, A is a C₂-C₄ oxyalkylene group, n is 0-10, and x is 3-5.

Recent Japanese publication No. JP 2005-139053 discloses a polyether compound of general formula RO-(EO)m-(PO)n-H, wherein R represents a 1-8C hydrocarbon group, EO represents an ethyleneoxy group, PO represents a propyleneoxy group, m represents 1-3 and n represents 1-8.

EP 308950 discloses primary hydroxyl group containing compounds of the formula CₙH₂ₙ(OH)₂ with the value of n being 5-10, in amounts from 0.1-20% by weight relative to the amount of cement, as suitable for reduction of shrinkage.

WO 96/06058 discloses a cement admixture composed of a compound with at least one secondary or tertiary hydroxyl group and at least one water reducing agent with a formula R'C(OH)R-(CH₂)ₙ-RC(OH)R' wherein each R independently represents a H atom or a C₁-C₂ group and each R' independently represents a C₁-C₂ alkyl and n is an integer of 1-2. Inclusion of 0.8-4% of the admixture per weight cement produces a shrinkage reducing effect, which is enhanced by the inclusion in the admixture of a water reducing agent in a ratio polyol:water reducing agent of 100:1-1:6.

EP 1627864 discloses a composition for shrinkage reduction in cement mortars comprising the combination of at least neopentyl glycol and calcium oxide but preferably also of other ingredients, including ventilated silica, anhydrite and one or more fluidifying agents. The effect of the neopentyl glycol and CaO together was distinctly greater than the neopentyl on its own.

WO 96/27563 discloses a cement admixture composition composed of certain alkyl ether alkylene adducts and oxyalkylene glycols, that is capable of causing the combined effects of inhibiting drying shrinkage while permitting substantial air entrainment.

Japanese application 58-60293 provides the suggestion that shrinkage reduction of cement can be accomplished by the addition aliphatic, alicyclic or aromatic group terminated oxyethylene and/or oxypropylene repeating chain compounds.

Compounds which further reduce the surface tension of water have been used as cement mixing agents to improve hardened concrete performance. JP 07017752 discloses the use of a fluorinated surfactant as such a cement mixing agent.

More complex compositions as shrinkage reducing agents have been more recently disclosed in US patent application No. 2002-0004559. The composition comprises at least one polymer selected from the group consisting of (a) a polymer having a structure derived from the residue of a compound containing 2 to 30 carbon atoms and one active hydrogen atom by the binding thereto of one oxyalkylene chain having a carboxyl-containing side chain, (b) a polymer having a structure derived from the residue of a compound containing 4 to 30 carbon atoms and two active hydrogen atoms by the binding thereto of at least one oxyalkylene chain having a carboxyl-containing side chain, (c) a polymer having a structure derived from the residue of a compound containing 1 to 30 carbon atoms and at least three active hydrogen atoms by the binding thereto of at least one oxyalkylene chain having a carboxyl-containing side chain and (d) a polymer having a structure derived from the residue of an amine by the binding thereto of one oxyalkylene chain having a carboxyl-containing side chain.

Despite the efforts of previous workers, the problem of shrinkage and crack formation in the setting and drying of cement compositions remains serious and thus, there is still a need for new compositions to address this technical problem. In particular the need exists for such cement admixtures that allow one to prepare pastes, mortars and concrete suitable for the preparation of floors, especially those with reduced joint spacing. Furthermore, because many of the shrinkage reducing admixtures currently on the market are relatively expensive, the need exists for new shrinkage reducing admixtures which allow maximum cost effectiveness in industrial applications.

Experimental work described hereinafter shows that a fluorinated surfactant alone does not substantially affect shrinkage in concrete. Certain glycols do reduce such shrinkage. It has been discovered that when a fluorinated surfactant, which has no shrinkage reduction activity on its own, and certain glycols are used together the shrinkage reduction activity is unexpectedly increased.

### SUMMARY OF THE INVENTION

The present invention relates to a composition comprising a hydraulic binder, a low molecular weight glycol having the formula CₙH₂ₙ(OH)₂ wherein n is an integer from 2 to 10, preferably from 2 to 9, and a fluorinated surfactant capable of reducing the surface tension of pure water to a value below 30 mN/m at a concentration of 1% or less.

The measurement of surface tension should be performed at room temperature. The fluorinated surfactant is preferably capable of reducing surface tension of pure water to a value below 25 mN/m or, more preferably, below 20 mN/m at a concentration of 1% or less.

The fluorinated surfactant is generally soluble and/or dispersible in water and/or the glycol and/or a glycol/water mixture. Most preferably the fluorinated surfactant is soluble and/or dispersible in water and in glycol and in a glycol/water mixture.

Advantageously, the fluorinated surfactant is non-ionic.

According to an further embodiment of the composition of the invention, said composition comprises a hydraulic binder, a low molecular weight glycol having the formula CₙH₂ₙ(OH)₂ wherein n is an integer from 2 to 10, preferably 2 to 9, and a non-ionic fluorinated surfactant which is soluble and/or dispersible in water and/or glycol and/or a glycol/water mixture.

For both embodiments, the glycol and the fluorinated surfactant are preferably used as a liquid additive.

The liquid additive is preferably present at 0.1-10% by weight of binder.

The liquid additive preferably contains up to 20 wt% fluorinated surfactant; the additive preferably contains up to 80% glycol.

The liquid additive preferably contains 0.002-2 wt% fluorinated surfactant, more preferably 0.01-0.2 wt% fluorinated surfactant.

It will be understood that in the glycol of formula CnH2n(OH)2 the two hydroxy (OH) groups are generally not attached to the same carbon atom.

According to a preferred embodiment, the glycol is chosen from the group consisting of ethylene glycol, propylene glycol, butylene glycol, pentylene glycol, hexylene glycol and mixtures of two or more thereof.

The glycol is preferably hexylene glycol, and more particularly the following isomer of hexylene glycol: 2-methyl-2,4-pentanediol.

According to a preferred embodiment, the fluorinated surfactant is a fluoroaliphatic polyester.

The invention also provides a wet mortar or concrete composition comprising a hydraulic binder, a low molecular weight glycol having the formula CₙH₂ₙ(OH)₂ wherein n is an integer from 2 to 10, preferably 2 to 9, a fluorinated surfactant capable of reducing the surface tension of pure water to a value below 30 mN/m at a concentration of 1% or less, water and sand and/or aggregates and/or fillers.

According to a particular embodiment of the wet mortar or concrete composition of the invention, the glycol and the fluorinated surfactant are as described above.

According to a particular embodiment of the wet mortar or concrete composition of the invention, the water-to-hydraulic binder ratio is 0.1 to 1.00 by mass, preferably 0.15 - 0.60 and more preferably 0.20 - 0.50.

It is another object of the invention to provide a method for the preparation of the wet mortar or concrete composition of the invention which comprises the step of mixing the composition of the invention together with water and sand and/or aggregates and/or fillers.

It is another object of the invention to provide a method for the preparation of the wet mortar or concrete composition of the invention, which comprises the step of mixing a hydraulic binder, a low molecular weight glycol having the formula CₙH₂ₙ(OH)₂ wherein n is an integer from 2 to 10, preferably 2 to 9, a fluorinated surfactant capable of reducing the surface tension of pure water to a value below 30 mN/m at a concentration of 1% or less, together with water and sand and/or aggregates and/or fillers.

Said method may comprise the substeps of:
(i) dispersing the fluorinated surfactant in the glycol to form a liquid admixture; and of
(ii) adding this liquid admixture to the hydraulic binder, together with the water, sand and/or aggregates and/or fillers.

Alternatively, the mixing step may comprise the substeps of:
(i) dispersing either the fluorinated surfactant or the glycol in the hydraulic binder; and of
(ii) subsequently adding the other of the fluorinated surfactant or the glycol together with the water, sand and/or aggregates and/or fillers.

The glycol and the fluorinated surfactant are advantageously as described above in relation to the composition of the invention.

It is another object of the invention to provide a method for the preparation of poured mortar or concrete, which method comprises:
A) the step of pouring the wet mortar or concrete composition of the invention; or
B) the steps of:
   B) (i) pouring a wet mortar or concrete composition comprising a hydraulic binder, water and sand and/or aggregates and/or fillers;
   B) (ii) subsequently applying a low molecular weight glycol having the formula CₙH₂ₙ(OH)₂ wherein n is an integer from 2 to 10, preferably 2 to 9, and a fluorinated surfactant capable of reducing the surface tension of pure water to a value below 30 mN/m at a concentration of 1% or less, either sequentially or simultaneously as a liquid admixture; or
C) the steps of:
   C) (i) pouring a wet mortar or concrete composition comprising a hydraulic binder, water and sand and/or aggregates and/or fillers, and either one of a low molecular weight glycol having the formula CₙH₂ₙ(OH)₂ wherein n is an integer from 2 to 10, preferably 2 to 9, and a fluorinated surfactant capable of reducing the surface tension of pure water to a value below 30 mN/m at a concentration of 1% or less;
   C) (ii) subsequently applying the other of the molecular weight glycol and the fluorinated surfactant.

Advantageously, the glycol and the fluorinated surfactant of step B) (ii) or of steps C) (i) and C) (ii) are as described above in relation to the composition of the invention.

According to a particular embodiment, the application defined in step B) (ii) or C) (ii) is made by spraying or brushing.

The invention also relates to a concrete object obtainable by the setting of the wet mortar or concrete of the invention or the setting of the wet mortar or concrete obtainable by one of the methods of the invention.

Preferably, said setting comprises curing the mortar or concrete.

Preferably, said concrete object is a floor.

The invention also relates to the use of a low molecular weight glycol having the formula CₙH₂ₙ(OH)₂ wherein n is an integer from 2 to 10, preferably 2 to 9, and of a fluorinated surfactant capable of reducing the surface tension of pure water to a value below 30 mN/m at a dosage of 1% or less, for reducing shrinkage in hydraulic binder-based articles.

Advantageously, the glycol and the fluorinated surfactant are as described above in relation to the composition of the invention.

The invention also relates to a product comprising:
- a hydraulic binder;
- a low molecular weight glycol having the formula CₙH₂ₙ(OH)₂ wherein n is an integer from 2 to 10, preferably 2 to 9; and
- a fluorinated surfactant capable of reducing the surface tension of pure water to a value below 30 mN/m at a concentration of 1% or less;
as a combined preparation for separate, simultaneous or sequential use in the preparation of a hydraulic binder-based article.

Advantageously, the glycol and the fluorinated surfactant are as described above in relation to the composition of the invention.

The present invention seeks to achieve the reduction of the drying shrinkage of a cement paste, mortar or concrete by at least 5% relative to the untreated concrete whilst using only relatively small dosages of admixture, typically as low as 0.2% by weight of the dry cement. Surprisingly, the use of a small amount of a strong fluorinated surfactant in combination with a glycol gives a synergistic effect, thus providing a cost effective and efficient method for the reduction of the cement paste, mortar or concrete shrinkage upon drying. In particular, the present invention is suitable for the preparation of either un-reinforced or reinforced concrete floors. The invention is especially suitable for the preparation of concrete floors with increased joint spacing generally associated with a reduced risk of cracking due to drying shrinkage.

### BRIEF DESCRIPTION OF THE FIGURES

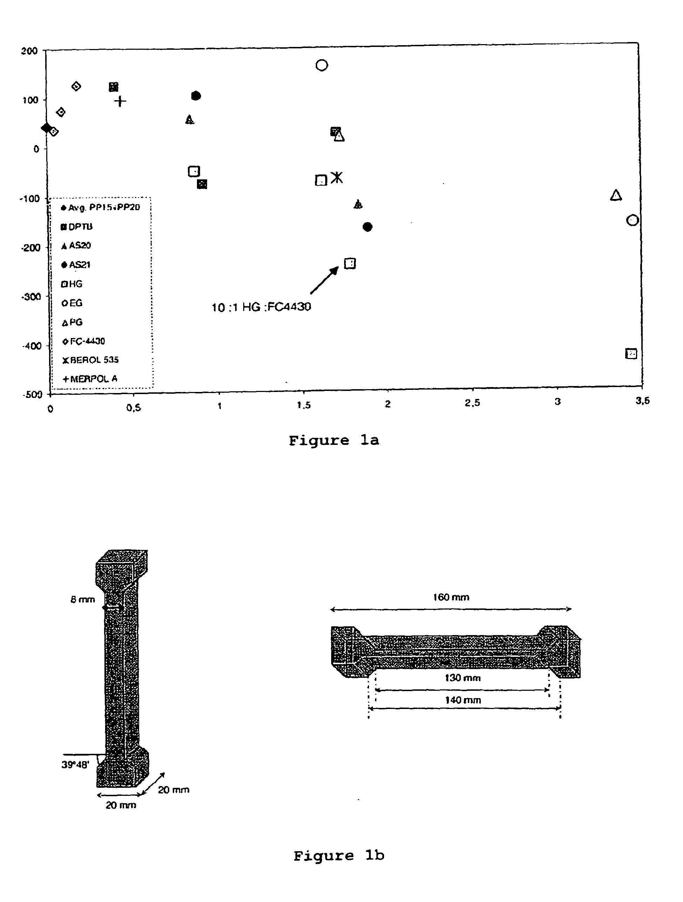

**Figure 1a****:** Comparison of the shrinkage reduction effect of a selection of additives. The X axis of the graph indicates the additive dose in % dry weight/cement. The Y axis indicates the "second shrinkage" - "first shrinkage" in µm/m (or ppm). The protocol is as follows: cement paste bar specimens (see **Figure 1b**) designed to dry rapidly in air were moist cured at 60°C for one week and then dried at 20°C, 50%/RH for a period of approximately 5 weeks. Then these specimens were soaked by immersion in solutions of additives at pre-determined concentrations for a period of 48 hours to saturate them with a known concentration of the additive. The "first shrinkage" corresponds to the bar length after drying (M2) compared to the initial state after moist curing but before drying (M1). The "second shrinkage" corresponds to the difference between the M3 and M1 length, where M3 corresponds to a third measurement made after an additional period of approximately 5 weeks during which the paste specimens were further allowed to dry at 20°C and 50% RH. The values on the Y axis thus correspond to M3-M2. Abbreviations used: HG = hexylene glycol, EG = ethylene glycol, DPTB = dipropylene glycol tertiary butyl ether, PG = (mono) propylene glycol, AS20 = Tetraguard 20 and AS21 = Tetraguard 21 as provided by Degussa FC 4430 (Fluorad 4430,a 3M product),Berol 535 (an Akzo Nobel non-ionic surfactant) and Merpol A (a DuPont non-ionic surfactant). The point labelled Avg PP15+PP20 represents the average of two control samples without surfactant or glycol.
**Figure 1b****:** Cement paste bar specimens used in the shrinkage reduction experiments reported in **Figure 1a****.**
**Figure 2****:** Effect of ethylene glycol and fluorinated surfactant FC-4430 upon shrinkage reduction in cement bars. The experimental conditions are as for **Figure 1**. The second drying shrinkage (M3 - M1) is expressed as µm/m (Y-axis) and was measured as a function of time in hours (X-axis).
**Figure 3**: depicts the results of Example 3 described hereinafter.

### DESCRIPTION OF EMBODIMENTS

### Hydraulic binder

In the context of the present invention by "hydraulic binder" is meant any one of:
- Portland cement, or
- calcium aluminate cement, or
- magnesium phosphate cement, or
- supersulphated slag cements, or
- alkali activated slag cement and, optionally,
- hydraulic fillers, or
- a mixture thereof.
   In particular, the hydraulic binder used in the context of the invention includes any one of the five types of Portland cement types known in the art according to the EN 197-1 classification.
- I Portland cement (comprising Portland cement and up to 5% of minor additional constituents);
- II Portland-composite cement (Portland cement and up to 35% of other single constituents);
- III Blastfurnace cement (Portland cement and higher percentages of blastfurnace slag);
- IV Pozzolanic cement (comprising Portland cement and higher percentages of pozzolan);
- V Composite cement (Comprising Portland cement and higher percentages of blast furnace slag and pozzolan or fly ash).

Suitable magnesium phosphate cements for the invention have at least 30% by weight of magnesium phosphate.

The hydraulic binder may contain hydraulic fillers such as ground blast furnace slag, fly ash, fumed silica and other pozzolanic materials such as diatomaceous earth and calcined clays or shales. In the current invention the pozzolanic material, if present, represents less than 90% by weight of the dry cement mix, preferably between 10 and 50% by weight. The particle size distribution of fly ash can vary widely depending on the process from which it is obtained.

A fine limestone filler may be added to the binder for improved compaction of the cement paste or for reduced strength loss. The limestone filler, which may serve as a replacement or partial replacement of the pozzolanic material, can represent up to about 30 parts per 100 parts binder.

Other binders that may be used in the present invention include supersulphated cements and alkali activated slag cements.

### Additives

Additives which can be used in conjunction with the additive of the invention include: classical additives, such as superplasticizers, accelerators, retarders, thickeners, tracers, water repellants, defoamers.

One or more superplasticizers may in particular be used according to the invention. For instance sulfonated melamine-formaldehyde condensates (SMF), sulfonated naphthalene-formaldehyde condensates (SNF) and modified lignosulfonates (MLS) are all suitable superplasticizers that may be used in the present invention. Acrylic copolymer superplasticizers may also be used, preferably composed of polymers comprising a polycarboxylic, optionally salified chain, to which other groups (for instance, of the polycarboxylate or polyoxyethylene types) are attached.

Some superplasticizers are referred to as water reducers. In the Concrete Admixtures Handbook, Properties Science and Technology, V.S. Ramachandran, Noyes Publications, 1984.

A water reducer is defined as an additive which reduces the amount of mixing water of concrete for a given workability by typically 10 - 15%. Water reducers include, for example lignosulphonates, hydroxycarboxylic acids, carbohydrates, and other specialized organic compounds, for example glycerol, polyvinyl alcohol, sodium alumino-methylsiliconate, sulfanilic acid and casein. Such water-reducing agents are embraced by the term superplasticizer as used in this specification including the accompanying claims.

Superplasticizers belong to a new class of water reducers chemically different from the normal water reducers and capable of reducing water contents by about 30%. The superplasticizers have been broadly classified into four groups: sulphonated naphthalene formaldehyde condensate (SNF) (generally a sodium salt); or sulphonated melamine formaldehyde condensate (SMF); modified lignosulfonates (MLS); and others. More recent superplasticizers include polycarboxylic compounds such as polyacrylates. The superplasticizer is preferably a new generation superplasticizer, for example a copolymer containing polyethylene glycol as graft chain and carboxylic functions in the main chain such as a polycarboxylic ether. Sodium polycarboxylate-polysulphonates and sodium polyacrylates may also be used. The amount of superplasticizer required generally depends on the reactivity of the cement. The lower the reactivity the lower the amount of superplasticizer required. In order to reduce the total alkali content the superplasticizer may be used as a calcium rather than a sodium salt.

One or more setting accelerators may also be used according to the invention in order inter alia to obtain a setting time (period between the start of setting and the end of setting) which is compatible with the desired application. For example, accelerators may be calcium chloride, calcium nitrite, calcium nitrate, potassium sulfate, sodium sulfate, lithium sulfate, and lime under various forms such as quick lime or hydrated lime or alpha hemi-hydrate.

One or more setting retarders may also be used according to the invention in order to obtain a setting time (period between the start of setting and the end of setting) which is compatible with the desired application. For instance, retarders may be chosen from carboxylic acids, for example citric acid, sugars and their derivatives.

Thickeners may also be used according to the invention in order to prevent the risk of segregation and bleeding. For instance viscosity agents may be chosen from various biopolymers produced via fermentation (such as gums), precipitated silica or derivatives from cellulose.

Fibers that may be included as additives in the binder of the invention include those that are made from polypropylene, cellulose, glass and PVA, nylon and steel, as well as blended fibers.

Defoamers suitable for use in the composition of the invention include tri-butyl phosphate

Expansive additives that may be used in conjunction with the present invention include CaO, MgO and expansive hydraulic fillers including ettringite-forming expansive minerals such as calcium sulfo-aluminates.

### Shrinkage reducing admixture

In the present invention the admixture is a mixture comprising a low molecular weight glycol having the formula CₙH₂ₙ(OH)₂ wherein n is an integer from 2 to 10, preferably 2 to 9, and a fluorinated surfactant capable of reducing the surface tension of pure water to a value below 30 mN/m at a concentration of 1% or less. According to a preferred embodiment, the admixture consists, or consists essentially, of the glycol and the fluorinated surfactant (dispersed or dissolved in the glycol).

Suitable low molecular weight glycols include but are not limited to ethylene glycol, diethylene glycol, triethylene glycol, propylene glycol, butylene glycol, pentylene glycol or hexylene glycol. Mixtures of these glycols may also be used. The glycol is preferably a secondary and/or tertiary glycol but not a primary glycol. The preferred glycol is 2-methyl-2,4-pentanediol, a particular isomer of hexylene glycol. The term hexylene glycol as used below will refer to 2-methyl-2,4-pentanediol.

The fluorinated surfactant is generally soluble and/or dispersible in water and in glycol and in a glycol/water mixture (because it is generally dissolved or dispersed first in glycol and then dissolved or dispersed in (or applied to, for example sprayed onto) a mortar composition containing water).
Fluorinated surfactants include anionic fluorinated surfactants (preferably a salt of an F-alkyl carboxylic acidor or an F-alkyl phosphate), cationic fluorinated surfactants (preferably an F-alkyl trimethylammonium compound), amphoteric fluorinated surfactants (preferably an F-alkyl betaine), non-ionic fluorinated surfactants (preferably an EO adduct of an F-alkyl amide, an F-alkyl oligomer or an adduct of Rf-epoxy and EO (ethylene oxide)) and fluorinated polyesters.
Said fluorinated surfactant is preferably a non-ionic fluorinated surfactant). Examples of fluorinated surfactants suitable for the present invention are those manufactured by Seimi Chemical Co., Ltd and notably: anionic fluorinated surfactants such as S-111 (salt of F-alkyl carboxylic acid), S-112 (F-alkyl phosphate), S-113 (salt of F-alkyl carboxylic acid); cationic fluorinated surfactants such as S-121 (F-alkyl trimethylammonium); amphoteric fluorinated surfactants such as S-131 or S-132 (F-alkyl betaine); non-ionic fluorinated surfactants such as S-145 (EO adduct of F-alkyl amide), S-101 (oligomer with F-alkyl group), KH-40 (adduct of Rf-epoxy and EO) and SA-100 (blend of Rf-oligomer and HC-surfactant). However, the most preferred fluorinated surfactant is fluorinated polyester sold by 3M under the trade name Fluorad FC-4430. A mixture of surfactants can also be used.

The shrinkage reducing additive is present at 0.1-10% by weight of dry hydraulic binder, and it contains up to 20% fluorinated surfactant. Preferably, the liquid additive contains 0.002% - 2% fluorinated surfactant and more preferably between 0.01%-0.2%.

In this specification including the accompanying claims percentages and ratios are by weight unless otherwise stated.

### Dry mortar or concrete composition - wet mortar or concrete composition

In the context of the present invention, a "dry mortar composition" or "dry concrete composition" comprises a composition as defined above together with aggregates and/or fillers. For example, sand may be used as a particular type of aggregate. The aggregates and/or fillers referred to herein preferably have an average diameter comprised between 0 and 8 mm. A preferred binder to aggregates-fillers ratio varies according to the product design and may be established by one skilled in the art. The cement compositions provided by the present invention exhibit performances in terms of rheology, water demand, setting time, swelling, and strength development etc. that are very satisfactory with respect to the use of said cement for making floors, especially those with increased joint spacing, and that are at least equivalent to the performances of prior art cement.

The water content of the wet cement mixture has a direct influence on the tendency of the resulting product to shrink. The mortar or concrete mix of the present invention has a water-to-hydraulic binder ratio ranging from 0.10 to 1.0, preferably from 0.15 to 0.60 and, most preferably, from 0.20 to 0.50.

The composition according to the invention allows the preparation of mortar, plaster and especially concrete objects demonstrating a reduced tendency to shrinkage. Concrete floors prepared according to the invention are less prone to shrinkage, can tolerate increased joint spacing and have improved flatness compared to floors prepared using compositions of the prior art.

Furthermore the method for preparation of wet mortar, plaster and concrete pastes incorporating the hydraulic binder according to the invention is very flexible allowing the user to add the low molecular weight glycol and fluorinated surfactant at various stages of the concrete mixing or even after placing but generally before hardening.

### Methods of preparation of the wet paste, mortar or concrete mixture

The present invention relates to a hydraulic binder composition with improved shrinkage reduction properties which composition comprises a low molecular weight glycol and a fluorinated surfactant which may be added in the form of a liquid admixture. The invention offers much process flexibility in the mode of preparation of a wet paste, mortar or concrete mixture, incorporating this composition, in that there are many ways possible to carry out the preparation.

The process may, for example, be carried out in the following ways:
Process A
   (i) Premixing or dispersing the low molecular weight glycol and fluorinated surfactant to form a liquid admixture.
   (ii) Adding this to the hydraulic binder, together with water, and sand and/or aggregate and/or fillers and/or one or more conventional concrete or mortar additives chosen from, e.g. expansive agents, superplasticizers, dispersants, accelerators, retarders, fibers, and thickeners and
   (iii) mixing the resulting composition together in an appropriate mortar or concrete mixer.

Step (ii) may be carried either essentially all in one step, in which case the mixing is carried out using a cement mixer. It may also be advantageous to premix the glycol/fluorinated surfactant mixture with the water.

Alternatively step (ii) may be carried out in separate substeps comprising (a) adding the liquid admixture of step (i) to the hydraulic binder and subsequently (b) adding water, and sand and/or aggregate and/or fillers and/or one or more additives. The fillers may also be added to the hydraulic binder before or during step (b).

Alternatively step (ii) may be carried out in the substeps comprising (c) adding only one of the components of step (i) i.e. either the fluorinated surfactant or the glycol, to the binder and subsequently (d) adding water, and the remaining component of step (i) and sand and/or aggregate and/or fillers and/or one or more additives. Thus, either the glycol or the fluorinated surfactant may be added first to the dry binder and the remaining component added later along with the water, aggregate and/or fillers.

Thus according to step (ii)(a) or (ii)(c) the composition comprising the glycol and/or fluorinated surfactant may be made at the cement plant and may thereafter be transported in bags or containers.

Furthermore the glycol and/or fluorinated surfactant may be added to the water before the latter is added to the hydraulic binder according to step (ii), or can be added along with any of the other additives.

Two further processes according to the invention are as follows,

Process B, comprising the steps of:
(i) mixing a hydraulic binder, water, sand and aggregate and/or fillers and/or conventional concrete or mortar admixtures, and
(ii) adding the low molecular weight glycol and the fluorinated surfactant either together or separately.

Process C, comprising the steps of:
(i) mixing a hydraulic binder, water, sand and aggregate and/or fillers and/or conventional concrete or mortar admixtures, and either low molecular weight glycol or the fluorinated surfactant
(ii) adding whichever of the low molecular weight glycol or the fluorinated surfactant that was not added in step (i).

Thus, in process B or C the liquid admixture of glycol and/or fluorinated surfactant may be added after the other paste components. This may be carried out either by mixing with the other paste components before the object to be prepared is poured, or else the liquid admixture may be applied to the surface of the object after it has been poured but generally before it has hardened. For example, one may pour the concrete floor using standard methods and then apply the liquid admixture as a concentrated solution (e.g. of between 15 and 30%, preferably 20% by weight of water) by spraying, or brushing etc.

The mode of preparation of wet paste, mortar or concrete mixture is chosen in consideration of the particular circumstances in question; thus some of the factors that will contribute to the decision as to which method to use are the following:
- availability of the various composition components and access to mixing equipment,
- time constraints,
- transport constraints,
- size of object to be prepared,
- binder composition

### Placing techniques

Placing techniques that are known in the art may be used to place the wet mortar or concrete paste of the invention. Preferably, the wet concrete that is destined for large areas- as in the case of concrete floors- is placed in long strips, in general by tail-gating. Intermediate contraction joints may be installed at specified intervals transverse to the length of the strips. In general, the wet concrete of the invention may be placed on the base at a rate at which it can be spread, bull floated or darbied and re-straightened to avoid bleeding water collecting on the surface. Spreading may be carried out by hand using shovels or preferably, by mechanical spreaders. Consolidation may be carried out by either internal or surface vibration. Screeding may be carried out by hand using a straightedge or by using a mechanical screed or by laser controlled finishing equipment known in the art.

### Curing techniques

It will be understood that curing may be used. Regardless of the cement or the blends of cementitious materials used, concrete according to the invention is generally kept in a proper moisture and temperature condition during its early stages if it is to fully develop it strength and durability potential. The primary purpose of curing is to slow the moisture loss from, e.g. the slab, so that effective hydration may occur. In general, longer curing methods are used if drying shrinkage is to be minimised. Curing techniques known in the art may be used to cure the objects prepared according to the invention. In particular, the subgrade may be pre-wetted. Then the slab may be covered either by a layer of water or by a sealer (preferably soon after finishing). The water curing method is compatible both with the embodiment where the shrinkage-reducing additive is premixed with the mortar paste and with the embodiment where the additive is applied, e.g. sprayed, after pouring. The sealing curing method is preferably used in combination with the embodiment where the shrinkage-reducing additive is premixed with the mortar paste.

For example, water curing techniques suitable for concrete floors include ponding, sprinkling or immersion as suitable methods for slabs areas without joints. Fog spraying is a preferred method. For curing of joints wet coverings or moisture retaining coverings, for example, Burlap, or more preferably, white fibre covering may be used. Seven days of uninterrupted curing is recommended for curing objects of the invention. Known precautions for cold and hot weather conditions may be taken if necessary.

### Shrinkage joint recommendations

Joints are used in slab on-grade construction to limit the frequency and width of random cracks caused by volume changes. Generally, floor maintenance can be reduced if a limitation in the number of joints or an increase in the joint spacing can be accomplished without increasing the number of cracks - for example, wear and tear on fork lifts bearings and wheels. Reduced jointing permits faster construction methods, as jointing takes extra time to finish or cut. Thus it is clearly advantageous to reduce the number of joints in the concrete slabs.

Different expert bodies, including the ASTM, ACI and NF, have recommended guidelines for joint spacing in concrete floors. The ACI recommendation for unreinforced, plain concrete slabs is that joint spacings are 24-36 times the slab thickness up to a maximum spacing of 5.5 m. With these joint spacings random cracks may be expected to occur in 0 - 3% of the floor slab panels. In general the joint spacings in standard nominally reinforced concrete can be increased somewhat. In particular ACI recommendations for contraction joints at a maximum spacing of 30 times the thickness for unreinforced slabs (for example, 3-4 m in both directions for 100 mm slabs, and 5-6.3 m intervals for 200 mm slabs). According to the current invention it is possible to prepare substantially crack-free concrete slabs with joint spacing up to four times the expert recommendations. This effect is extremely important and advantageous for the reasons outlined above.

### Floor Flatness

Reduction of drying shrinkage allows one to prepare a floor surface that is very flat. Floor flatness is extremely important in construction. For example good flatness in warehouse floors allows the users to stack goods higher and more generally to have a better storage use. Furthermore a flat floor serves as a better load bearer and thus protects the subfloor.

The invention also provides a substantially dry composition comprising the following components: a hydraulic binder; a low molecular weight glycol having the formula CₙH₂ₙ(OH)₂ wherein n is an integer from 2 to 10; a fluorinated surfactant capable of reducing the surface tension of pure water to a value below 30 mN/m at a concentration of 1% or less; and/or sand; and/or aggregate; and/or filler.

The invention further provides a process for the preparation of a mortar or concrete composition which comprises mixing a substantially dry composition as just described, or the components of such a substantially dry composition, with water.

The invention also provides a composition comprising a low molecular weight glycol having the formula CₙH₂ₙ(OH)₂ where wherein n is an integer from 2 to 10, and of a fluorinated surfactant capable of reducing the surface tension of pure water to a value below 30 mN/m at a concentration of 1% or less. The composition is preferably in the form of an aqueous solution or dispersion.

The invention also provides the use of a low molecular weight glycol having the formula CₙH₂ₙ(OH)₂ where wherein n is an integer from 2 to 10, and of a fluorinated surfactant capable of reducing the surface tension of pure water to a value below 30 mN/m at a concentration of 1% or less, for reducing shrinkage in hydraulic binder-based articles.

According to a further feature of the invention there is provided a product comprising:
- a hydraulic binder;
- a low molecular weight glycol having the formula CₙH₂ₙ(OH)₂ wherein n is an integer from 2 to 10; and
- a fluorinated surfactant capable of reducing the surface tension of pure water to a value below 30 mN/m at a concentration of 1% or less;
as a combined preparation for separate, simultaneous or sequential use in the preparation of a hydraulic binder-based article.

The following Examples illustrate the invention without limiting it.

### EXAMPLE 1

### Shrinkage reduction in a cement paste

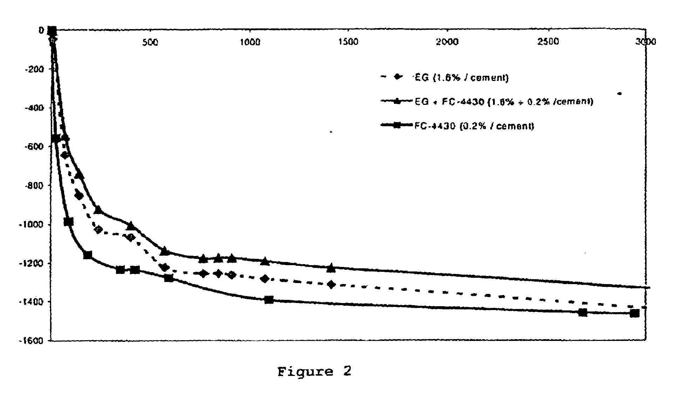

Experiments carried out to investigate the relative ability of certain additives to reduce reversible second drying shrinkage are shown in **Figure 1a**. These experiments were conducted on a cement paste, i.e. a water/cement mixture at a W/C ratio of 0.4. The cement used was CEM1 52.5 N PMES (Lafarge). Deionised water at 20°C(±1°C) was used. As already indicated above, the samples were soaked by immersion into various additive solutions. It is observed that the individual additives demonstrate a certain reduction in drying shrinkage, hexylene glycol showing the best performance. However, the best result by far is observed with the combination of hexylene glycol with the non ionic fluorinated surfactant FC-4430. The mixture gives a significantly better result than any of the other additives tested at the same dosage, including hexylene glycol and is also far better than using the FC-4330 on its own, which is totally ineffective. **Figure 1a** demonstrates that Hexylene Glycol and FC-4330 - the two additives - have a synergistic effect, having a greater ability to reduce shrinkage than either of the two additives taken singly. Other simple glycols not according to the invention were tested and they also displayed the same synergistic behaviour as is shown for Ethylene Glycol and FC-4330 in Figure 2. Thus the current invention of the combination of an inexpensive simple glycol with a strong fluorinated surfactant has significant advantages in formulating new shrink-reducing additives for maximum cost-effectiveness in specific applications. The current invention may be applied to many types of objects. It is known that effectiveness in the test procedure described above is indicative of shrinkage reduction activity when the tested shrinkage reducing materials are incorporated into wet hydraulic binder-based mixes such as mortar or concrete.

### EXAMPLE 2

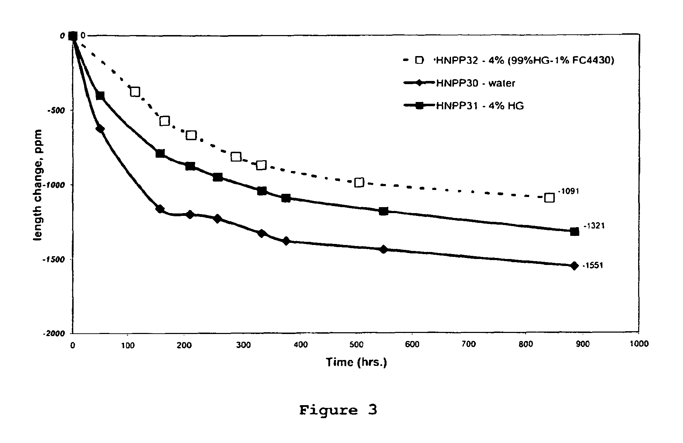

Sets of paste specimens were made in which organic additives were added as an admixture, i.e. with the mix water. They were cast into 20x20x160 mm prisms, which were moist cured for 24 hours in moulds at 20°C, and then for six days at 60°C and 100%RH, then cooled to 20°C wet before starting drying shrinkage measurements at 20°C and 50%RH. Length changes vs. time are shown in Figure 3.
Three sets were tested:
a plain cement paste (HNPP30-water);
a cement paste admixed with 4% hexylene glycol (HNPP31-4%HG); and
a cement paste admixed with 4% of a 1% solution of fluorinated surfactant FC4430 in hexylene glycol (HNPP32-4%(99%HG-1%FC4430)). Admixture dosages are expressed as percentage by mass of cement)

Results shown in Figure 3 indicate that the use of the mixture of hexylene glycol and FC4430 was unexpectedly more effective than the use of the same amount of pure hexylene glycol in reducing the first drying shrinkage of well-cured cement pastes.

## Claims

1. A composition comprising a hydraulic binder, hexylene glycol and a fluorinated surfactant selected from a fluoroaliphatic polyester capable of reducing the surface tension of pure water to a value below 30 mN/m at a concentration of 1% or less.

2. The composition of claim 1, wherein said fluorinated surfactant is non-ionic.

3. The composition of claim 1 or 2, wherein the liquid additive, which comprises hexylene glycol and fluorinated surfactant, is present at 0.1-10% by weight of binder.

4. The composition of claim 3 wherein the liquid additive contains 0.002-2 wt% fluorinated surfactant.

5. A substantially dry composition comprising the following components: the composition according to claim 1; sand; and/or aggregate; and/or filler.

6. A process for the preparation of a mortar or concrete composition which comprises mixing a substantially dry composition according to claim 5, or the components of such a substantially dry composition, with water.

7. A wet mortar or concrete composition comprising the composition according to claim 1.

8. A concrete object obtainable by the method of claim 6 or by setting the wet mortar or concrete composition of claim 7.

9. The concrete object of claim 8 which is a floor.

## Patentansprüche

1. Eine Zusammensetzung, umfassend ein hydraulisches Bindemittel, Hexylenglykol und ein fluoriertes Tensid, ausgewählt aus einem fluoraliphatischen Polyester, der in der Lage ist, die Oberflächenspannung von reinem Wasser auf einen Wert von weniger als 30 mN/m bei einer Konzentration von 1% oder weniger zu verringern.

2. Die Zusammensetzung nach Anspruch 1, wobei das fluorierte Tensid nichtionisch ist.

3. Die Zusammensetzung nach Anspruch 1 oder 2, wobei das flüssige Additiv, das Hexylenglykol und fluoriertes Tensid umfasst, in 0,1-10 Gew.-%, bezogen auf das Bindemittel, vorliegt.

4. Die Zusammensetzung nach Anspruch 3, wobei das flüssige Additiv 0,002-2 Gew.-% fluoriertes Tensid enthält.

5. Eine im Wesentlichen trockene Zusammensetzung, umfassend die folgenden Komponenten: die Zusammensetzung gemäß Anspruch 1, Sand und/oder Aggregat und/oder Füllstoff.

6. Ein Verfahren zur Herstellung einer Mörtel- oder Betonzusammensetzung, umfassend das Vermischen einer im Wesentlichen trockenen Zusammensetzung gemäß Anspruch 5 oder der Komponenten einer solchen im Wesentlichen trockenen Zusammensetzung mit Wasser.

7. Eine feuchte Mörtel- oder Betonzusammensetzung, umfassend die Zusammensetzung gemäß Anspruch 1.

8. Ein Betonobjekt, das durch das Verfahren nach Anspruch 6 oder durch Abbinden der feuchten Mörtel- oder Betonzusammensetzung nach Anspruch 7 erhalten werden kann.

9. Das Betonobjekt nach Anspruch 8, das ein Boden ist.

## Revendications

1. Composition comprenant un liant hydraulique, de l'hexylène glycol et un tensioactif fluoré choisi parmi les polyesters fluoroaliphatiques capables de réduire la tension superficielle de l'eau pure jusqu'à une valeur inférieure à 30 mN/m à une concentration de 1 % ou moins.

2. Composition selon la revendication 1, dans laquelle ledit tensioactif fluoré est non ionique.

3. Composition selon la revendication 1 ou 2, dans laquelle l'additif liquide, qui comprend de l'hexylène glycol et un tensioactif fluoré, est présent à 0,1-10 % en poids de liant.

4. Composition selon la revendication 3, dans laquelle l'additif liquide contient 0,002-2 % en poids de tensioactif fluoré.

5. Composition sensiblement sèche comprenant les composants suivants : la composition de la revendication 1 ; du sable ; et/ou un granulat ; et/ou une charge.

6. Procédé de préparation d'une composition de mortier ou de béton qui comprend le mélange d'une composition sensiblement sèche de la revendication 5, ou des composants d'une telle composition sensiblement sèche, avec de l'eau.

7. Composition de mortier ou de béton humide comprenant la composition de la revendication 1.

8. Objet en béton pouvant être obtenu par le procédé de la revendication 6 ou par prise de la composition de mortier ou de béton humide de la revendication 7.

9. Objet en béton selon la revendication 8 qui est un plancher.
